Europäisches Patentamt

European Patent Office

Office européen des brevets

(11) Veröffentlichungsnummer: **0 413 845 B1**

(12) **EUROPÄISCHE PATENTSCHRIFT**

(45) Veröffentlichungstag der Patentschrift: **28.04.93**

(51) Int. Cl.[5]: **G01M 13/04**, G01M 7/00

(21) Anmeldenummer: **89115599.6**

(22) Anmeldetag: **24.08.89**

(54) Verfahren zur Schadensfrüherkennung an Maschinenteilen.

(43) Veröffentlichungstag der Anmeldung:
**27.02.91 Patentblatt 91/09**

(45) Bekanntmachung des Hinweises auf die Patenterteilung:
**28.04.93 Patentblatt 93/17**

(84) Benannte Vertragsstaaten:
**DE FR GB IT**

(56) Entgegenhaltungen:
DE-A- 3 245 505
DE-A- 3 703 429
US-A- 4 164 149
US-A- 4 513 622

KONSTRUKTION, Band 31, Nr. 9, 1979, Seiten 345-351, Darmstadt, DE; O.Buxmaum et al.: "Trennung von Beanspruchungs-Zeit-Funktionen nach ihrem Ursprung"

MESSEN UND PRUEFEN/AUTOMATIK, Band 10, Nr. 10, 1974; W.H. Bartak: "SEM-Technik - gestern Theorie, heute bewährte Praxis"

SIEMENS-ZEITSCHRIFT, Band 48, Nr. 9, 1974; P. Ringlage: "Schwingungsanalyse mit dem Probabilitymeter"

AUTOMOBILTECHNISCHE ZEITSCHRIFT, Band 81, Nr. 3, März 1971, Seiten 109-112, Schaffhausen, CH; H. Braun et al.: "Gegossene Achsteile - wirtschaftlich und betriebssicher"

(73) Patentinhaber: **CARL SCHENCK AG Landwehrstrasse 55 Postfach 40 18 W-6100 Darmstadt(DE)**

(72) Erfinder: **Zaschel, Jörg, Dr. Agnes-Miegel-Strasse 21 W-7410 Reutlingen(DE)**

(74) Vertreter: **Brandt, Ernst-Ulrich Fa. Carl Schenck AG Patentabteilung Landwehrstrasse 55 Postfach 40 18 W-6100 Darmstadt 1 (DE)**

**Beschreibung**

Die Erfindung bezieht sich auf ein Verfahren zur Schadensfrüherkenung an Maschinenteilen, insbesondere an Wälzlagern, bei dem erzwungene Schwingungen mit Hilfe eines Schwingungsaufnehmers erfaßt werden.

Aus der GB-PS 13 67 773 ist ein Verfahren zur Schadensfrüherkennung bei Maschinenteilen, insbesondere bei Wälzlagern bekannt, bei dem mit einem Schwingungsaufnehmer Signale erzwungener Schwingungen der Maschine erfaßt werden. Spitzenwerte der erzwungenen Schwingungen treten immer dann auf, wenn ein Defekt in einer ansonsten unbeschädigten Oberfläche eine zweite unbeschädigte Oberfläche überrollt. Die erfaßten Signale werden einem Spitzenwertdetektor und einem Mittelwertbildner zugeführt. In einem Dividierer wird das Verhältnis des Ausgangssignals des Spitzenwertdetektors zum Ausgangssignal des Mittelwertbildners gebildet und einer Anzeigeeinheit zugeführt. Überschreitet das Verhältnis eine vorgebbare Grenze, kann eine Signaleinrichtung ausgelöst werden. Mit diesem Verfahren lassen sich Oberflächendefekte ermitteln, solange sie noch geringfügig nach Zahl und Ausdehnung sind, jedoch ist bei diesem Verfahren zur Einstellung des Verhältnisgrenzwertes ein Rückgriff auf zurückliegende Meßergebnisse erforderlich.

Ein Verfahren der eingangs genannten Art, bei dem an der Maschine mit Hilfe von Schwingungsaufnehmern erzwungene Schwingungen der Maschine erfaßt werden, ist aus der DE-PS 32 45 505 bekannt. Dazu wird mit Hilfe von Schwingungsaufnehmern ein erster Körperschallparameter im Hochfrequenzbereich und ein zweiter Körperschallparameter im Tieffrequenzbereich des Frequenzspektrums gemessen und beide Meßwerte mit Hilfe eines Komparators verglichen. Aus den Meßwerten des ersten Körperschallparameters und des zweiten Körperschallparameters wird jeweils das Autoleistungsspektrum $G_{11}$ bzw. $G_{22}$ sowie aus beiden Körperschallparametern das Kreuzleistungsspektrum $G_{12}$ gebildet; aus diesen Werten wird die Kohärenzfunktion gebildet und ein Anstieg der Kohärenzfunktion als Schadenfrüherkennungssignal verwendet. Mit diesem Verfahren kann zwar unabhängig von der vorgeschalteten Ermittlung von Referenzwerten eine Schadensfrüherkennung durchgeführt werden, jedoch ist dieses Verfahren nicht geeignet, die Restlebensdauer des Maschinenteils abzuschätzen.

Der Erfindung liegt deshalb die Aufgabe zugrunde, eine Schadensfrüherkennung zu ermöglichen, welche neben einer Zustandsbeschreibung des Maschinenteils eine Abschätzung der Restlebensdauer des Maschinenteils ermöglicht.

Diese Aufgabe wird erfindungsgemäß mit den Merkmalen des Patentanspruchs 1 gelöst. Mit der Erfindung wird eine zuverlässige Zustandsbeurteilung, insbesondere eine Schadensfrüherkennung, verbunden mit einer Abschätzung der Restlebensdauer auf absoluter Basis möglich, ohne daß hierzu spezifische Erfahrungen des Betreibers oder ein Rückgriff auf zurückliegende Messungen, beispielsweise zur Ermittlung eines Referenzwertes wie bei relativen Messungen erforderlich sind. Die erfindungsgemäße Zustandsbeurteilung gestattet eine geplante Stillsetzung von Produktions-, Energieerzeugungs-, oder anderen technischen Anlagen zwecks Wartung zu geeigneten Zeitpunkten. Mit der Erfindung lassen sich Ausfallkosten bei ungeplanter Stillsetzung, die ein vielfaches der jeweiligen Reparaturkosten betragen, vermeiden. Es ist nicht erforderlich, zur Trendanalyse Protokolle über den Zustand des betreffenden Maschinenteils über die gesamte Betriebszeit der Maschine anzufertigen und zum Vergleich heranzuziehen, was den Aufwand für die Maschineninstandhaltung deutlich verringert.

In den Unteransprüchen sind vorteilhafte Weiterbildungen der Erfindung angegeben.

Anhand der Zeichnung wird die Erfindung im folgenden näher erläutert.

Es zeigen:

Fig. 1        den prinzipiellen Aufbau einer Einrichtung zur Durchführung des erfindungsgemäßen Verfahrens

Fig. 2        Diagramme der spektralen Leistungsdichte in Abhängigkeit von der Frequenz mit definierten Frequenzbereichen

Fig. 3        Häufigkeitsverteilungen in Amplitudendarstellung

Fig. 4 und Fig. 5        Geradlinienverteilungen in halblogarithmischer Darstellung

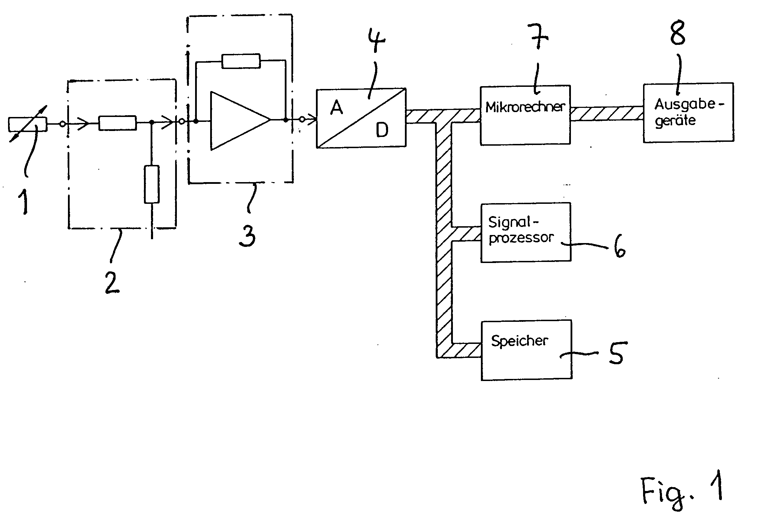

Die Figur 1 zeigt in schematischer Darstellung eine Einrichtung zur Durchführung des erfindungsgemäßen Verfahrens. Die schematisch dargestellte Einrichtung dient zur Früherkennung und Beurteilung von Wälzlagerschäden. Mit 1 ist ein Schwingungsaufnehmer bezeichnet, mit dessen Hilfe die bei gestörter Kinematik aufgrund eines Wälzlagerschadens sich ergebenden erzwungenen Schwingungen der Maschine sowie unvermeidliche Störschwingungen erfaßt werden. In der nachgeschalteten Signalanpassungsstufe 2 wird eine Anpassung des Meßsignals an die Einrichtung zur Weiterverarbeitung vorgenommen, beispielsweise eine Verstärkung oder Abschwächung des Meßsignals. In der sich anschließenden Vorverarbeitungsstufe wird aus dem gemessenen Signal, beispielsweise der gemessenen Beschleunigung, das zur Weiterverarbeitung erforderliche Signal gewonnen, beispielsweise der Schwingweg.

Im nachfolgenden Analog-Digitalwandler 4 wird das Signal digitalisiert und zwecks Weiterverarbeitung im Speicher 5 gespeichert.

Mit Hilfe des Signalprozessors 6 und des Mikrorechners 7 erfolgt eine Eliminierung des Störsignalanteils aus dem weiterverarbeitbar gespeicherten Signal. Dazu wird die gemessene Zeitfunktion y (t), die Nutz- und Störsignale enthält, mit einer theoretisch berechneten, nur dem Nutzsignal entsprechenden Zeitfunktion x(t) verglichen. Zur Ermittlung der Zeitfunktion x(t) wird das Wälzlager samt Beanspruchungsmechanismus rechnerisch abgebildet.

Dabei wird zunächst eine Unebenheitsfunktion x abhängig vom Ort entlang der Bahn der Wälzkörper definiert, die für die einzelnen Schadensfälle wie z. B. Kratzer, Grübchen, Risse oder Brüche unterschiedlich ist. Unter Einbeziehung der Geometrie der Wälzkörper und der betriebsbedingten Lagerkraft ergibt sich eine entsprechende Deformation zwischen Außenring und Lagergehäuse. Mit der Anzahl der Wälzkörper und der Umdrehungsgeschwindigkeit des Rotors ergibt sich an jedem Ort i zwischen Außenring und Lagergehäuse eine zeitabhängige Deformationsfunktion $x_{A,i}$ (t). Diese Deformationsfunktion repäsentiert mechanische Wellen auch im Lagergehäuse. Die Übertragungswege von allen Orten i zu einem Meßort, beispielsweise außen am Lagergehäuse, lassen sich vorzugsweise mittels Kontinuumsmechanik in bekannter Weise als Übertragungsfunktion darstellen.

Am Meßort erfaßt man die Zeitfunktion y (t), z. B. als Beschleunigungs-Zeit-Funktion.

Durch Korrelation von y (t) mit der Deformationsfunktion $x_{A,i}$ (t) ermittelt man die vom Lager erzeugten Signalanteile $y_L$ (t).

Ist das dynamische Systemverhalten von Lager und Maschine bekannt, so kann die Trennung von Signal und Störsignal mit einem Verfahren erfolgen, wie es beispielsweise in der Zeitschrift Konstruktion 31 (1979) Nr. 9, Seiten 345 bis 351 "Trennung von Beanspruchungs-Zeit-Funktionen nach ihrem Ursprung" beschrieben ist.

Bei einer zweikanaligen Messung können die Störanteile dadurch eliminiert werden, daß die Meßsignale beider Kanäle korreliert werden und die korrelierten von den nicht korrelierten Anteilen unterschieden werden. Je nach Anordnung der Schwingungsaufnehmer ist das Nutzsignal dem einen oder anderen Anteil zugeordnet.

Die genannten Methoden zur Störsignaleliminierung können auch kombiniert zum Einsatz kommen.

Mit Hilfe von Signalprozessor 6 und Mikrorechner 7 läßt sich danach das Nutzsignal $y_L$(t) in bekannter Weise aufspalten in einen determinierten, periodischen Anteil $y_d$(t), in periodisch wiederkehrende Anteile mit stochastischer Amplitude $y_s$(t) und einen allgemein stochastischen Anteil $y_n$(t), für die gilt:

$$y_L(t) = y_d(t) + y_s(t) + y_n(t) .$$

Diese Anteile lassen sich frequenzabhängig analysieren.

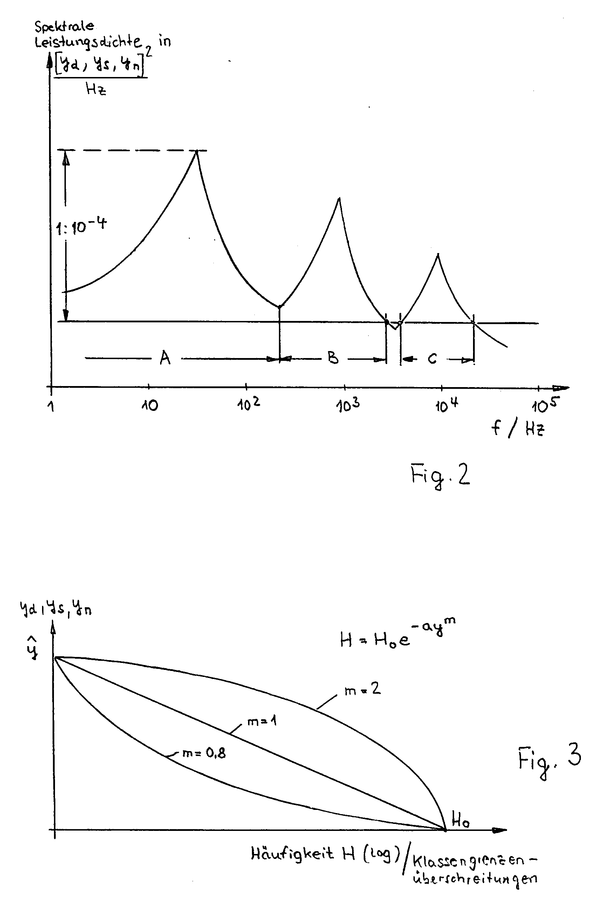

Für jeden Anteil $y_d$, $y_s$, $y_n$ der am Meßort erfaßten und um die Störanteile bereinigten Zeitfunktion $y_L$(t) wird das Frequenzspektrum, vorzugsweise als spektrale Leistungsdichte, ermittelt. Die Frequenzbereiche werden dabei zweckmäßig mittels Vorgabe eines absoluten oder relativen Dynamikbereichs, wie in Fig. 2 veranschaulicht, bestimmt. Die spektrale Leistungsdichte ist in Fig. 2 in Abhängigkeit von der Frequenz aufgetragen; es sind ferner die definierten Frequenzbereiche A, B und C eingetragen. Zur Bestimmung der Frequenzbereiche, in denen jeweils ausgewertet wird, werden die Frequenzanteile, die hauptsächlich zur Intensität beitragen, ermittelt. Dabei können durch den Übertragungsweg oder die Meßtechnik verursachte Verzerrungen des Meßsignals im Frequenzspektrum korrigiert werden, beispielsweise durch Anheben oder Absenken höherer Frequenzen.

Mittels Häufigkeitsanalysen werden nun die schadensbestimmenden Intensitäten für die bestimmten Frequenzbereiche bestimmt, dabei werden Größe, Umfang und Form der Häufigkeitsverteilung ermittelt. Die Verknüpfung von Frequenzbereich und Häufigkeitsverteilung ergibt einen Beanspruchungsfaktor für das Wälzlager.

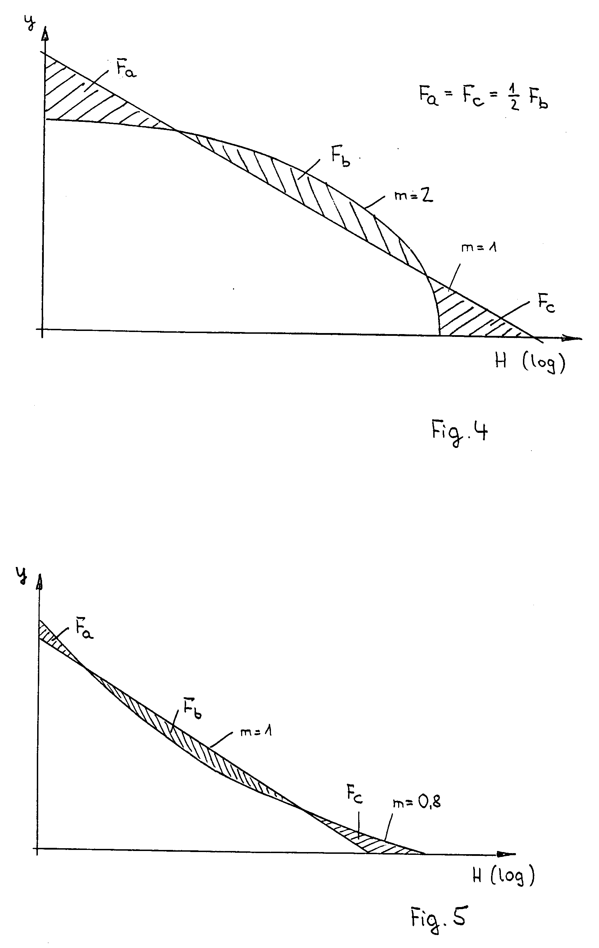

Dabei wird für jeden dieser Bereiche die Häufigkeitsverteilung der Klassengrenzüberschreitungen ermittelt. Diese Häufigkeitsverteilungen werden, immer noch getrennt für jeden Anteil $y_d$, $y_s$, $y_n$, wie in Fig. 3 veranschaulicht, typisiert. Die Häufigkeitsverteilungen mit m = 0,8 und m = 2 werden sodann in Geradlinienverteilungen, für die m = 1 gilt, umgewandelt, wie aus den Fig. 4 und 5 näher ersichtlich ist, für die schraffierten Flächen in der Darstellung gilt dabei $F_a = F_c = 1/2 \, F_b$.

3

EP 0 413 845 B1

Sodann wird für jeden Signalanteil i und jeden Frequenzbereich k der PI-Faktor (Pattern Intensity)

$$PI_{i,k} = \frac{\hat{Y}}{RMS} \cdot \frac{\log H_o}{\log\left(2 \cdot 10^6\right)}$$

gebildet, wobei

$\hat{Y}$       Maximalwert der Häufigkeitsverteilung des jeweiligen Signalanteils y im jeweiligen Frequenzbereich

RMS    Effektivwert des jeweiligen Signalanteils y im jeweiligen Frequenzbereich

$H_o$     Nulldurchgangszahl der Häufigkeitsverteilung

Summiert über alle k ergeben sich damit die anteilstypischen Faktoren $PI_d$, $PI_s$, $PI_n$.

Aus deren Summe ergibt sich schließlich der Gesamt-PI-Faktor, d. h. die Kombination mehrerer Beanspruchungsfaktoren ergibt den die Beanspruchung des Wälzlagers beschreibenden Faktor.

Mit Hilfe bekannter Verfahren zur Lebensdauerberechnung schwingbruchgefährdeter Bauteile, z. B. der Schadensakkumulationsrechnung nach MINER, die in der Veröffentlichung O. Buxbaum, Betriebsfestigkeit, Verlag Stahleisen mbH, Düsseldorf, 1986, Kap 3, näher beschrieben ist, wird ein relatives Schädigungsmaß berechnet. Hierzu ist eine lagertypische ertragbare Bezugsbeanspruchung vorzugeben. Die lagerspezifische ertragbare Bezugsbeanspruchung liegt in Form einer Wöhlerkurve oder einer Lebendauerlinie vor. Durch fortlaufende Beobachtung des Schädigungsmaßes über die Betriebsdauer des betreffenden Wälzlagers wird der Benutzer in die Lage versetzt, die wahrscheinliche Restlebensdauer abzuschützen.

Dabei wird zunächst das Beanspruchungskollektiv aus den bisher ermittelten Daten abgeleitet. Dies kann vereinfachend aus den ermittelten PI-Faktoren oder genauer durch Kombination der dort ermittelten Häufigkeiten geschehen.

Jeder PI-Faktor stellt, mit $\sqrt{2}$ multipliziert und mit der zugehörigen mittleren Frequenz versehen, ein einstufiges Amplitudenkollektiv dar, für das der Schädigungsanteil berechnet wird. Die Summe der Schädigungsanteile für jeden PI-Faktor ergibt die gesuchte, bis zu dem betrachteten Zeitpunkt eingetretene Gesamtschädigung.

Beim erfindungsgemäßen Verfahren ist die Historie so lange nicht erforderlich, als die PI-Faktoren unter einem Grenzwert liegen. Danach ist die Historie kumuliert in dem zum Betrachtungszeitpunkt festgestellten Schädigungsmaß enthalten. Die verbleibende Restlebensdauer ist ein unmittelbares Maß für die verbleibende Betriebsdauer, wozu Annahmen über den Schadensfortschritt mit der Zeit zu treffen sind. Diese Annahmen können auf einmal gewonnenen, allgemein gültigen Erfahrungswerten beruhen. Eine Trendanalyse wie bei bekannten Verfahren ist also im allgemeinen nicht erforderlich. Der Vorteil beim erfindungsgemäßen Verfahren beruht darin, daß die vorgenannte Berechnung auf der Beanspruchungsseite und somit unmittelbar schadensbezogen erfolgt, nicht wie bei Verfahren mit Trendanalyse auf der Signalseite. Die Aussagefähigkeit der berechneten Werte kann erforderlichenfalls noch dadurch gesteigert werden, daß die PI-Faktoren fortlaufend in einer Trendanalyse, aber eben auf der Beanspruchungsseite, erfaßt werden.

Aus den ermittelten Signalanteilen $y_d$, $y_s$ und $y_n$ lassen sich ferner Rückschlüsse auf bestimmte Wälzlager-Schadenstypen ziehen. Lokale Schäden sind durch Vorliegen aller drei Signalanteile gekennzeichnet, während bei ausgedehnten Schäden wie Pittingbildung, Grübchen, Riefen oder Rauhigkeit überwiegend die Signalanteile $y_s$ und $y_n$ vorliegen.

Die Kalibrierung kann entweder rechnerisch oder meßtechnisch vorgenommen werden.

Bei einer rechnerischen Kalibrierung wird prinzipiell, wie oben im Zusammenhang mit der rechnerischen Abbildung des Wälzlagers beschrieben, vorgegangen.

Bei der meßtechnischen Kalibrierung wird während oder kurz nach der Inbetriebnahme ein aller Wahrscheinlichkeit nach ungeschädigtes Lager meßtechnisch erfaßt. Hierbei treten Signale der Form $x_n$ (t) auf. Der Grundpegel $\bar{y}$ der Zeitfunktion y (t) am Meßort wird erfaßt und weiterverarbeitbar abgespeichert. Die nachfolgende Auswertung der Messungen wird auf diesen Grundpegel bezogen. In gleicher Weise wird mit dem PI-Faktor verfahren.

Für das jeweilige Lager ist die rechnerische Grundbeanspruchung aus Herstellerangaben bekannt. Somit kann ein Vielfaches des Grundpegels $\bar{y}$ in ein Vielfaches der Grundbeanspruchung des Lagers umgesetzt werden. Die Umsetzung erfolgt abhängig vom gesamten Übertragungsverhalten d. h. der rechnerischen Abbildung wie weiter oben erläutert, im einfachsten Fall linear.

4

In der Einrichtung nach Fig. 1 ist zur Anzeige von Meßwerten bzw. zur Kennwertdarstellung ein Ausgabegerät 8 vorgesehen, das beispielsweise als Display, Bildschirmgerät oder Drucker ausgebildet sein kann.

**Patentansprüche**

1. Verfahren zur Schadensfrüherkennung an Maschinenteilen, insbesondere an Wälzlagern, bei dem erzwungene Schwingungen mit Hilfe eines Schwingungsaufnehmers erfaßt werden, dadurch gekennzeichnet, daß die erfaßten. Signale in periodisch determinierte Signalanteile, in periodisch wiederkehrende Anteile mit stochastischer Amplitude, und in allgemein stochastische Anteile zerlegt werden, daß frequenzabhängig die Signalanteile zur Ermittlung von Kenngrößen für die Beanspruchung des Maschinenteils untersucht werden, und daß die ermittelten Beanspruchungs-Kenngrößen zur Feststellung der Schadensart herangezogen werden und/oder zur Feststellung eines Schädigungsgrades mit Kennwerten für die ertragbare Beanspruchung des Maschinenteils verglichen werden.

2. Verfahren nach Anspruch 1, dadurch gekennzeichnet, daß vom Schwingungsaufnehmer erfaßte Signale digitalisiert und weiterverarbeitbar gespeichert werden.

3. Verfahren nach Anspruch 1 oder Anspruch 2, dadurch gekennzeichnet, daß vor der Weiterverarbeitung der erfaßten bzw. gespeicherten Signale Störsignalanteile eliminiert werden.

4. Verfahren nach Anspruch 3, dadurch gekennzeichnet, daß die erzwungenen Schwingungen in zwei Meßkanälen erfaßt werden und durch Korrelation der beiden erfaßten Signale Störsignale eliminiert werden.

5. Verfahren nach Anspruch 3, dadurch gekennzeichnet, daß die erzwungenen Schwingungen in einem Meßkanal zeitabhängig erfaßt und mit einer berechneten, keine Störsignalanteile aufweisenden Zeitfunktion verglichen werden.

6. Verfahren nach einem der vorhergehenden Ansprüche, dadurch gekennzeichnet, daß Häufigkeitsanalysen von auf den Signalanteilen beruhenden schadenscharakteristischen Größen für vorgebbare Frequenzbereiche durchgeführt werden, und daß anhand der Häufigkeitsverteilung schadenbestimmende Intensitäten ermittelt werden, die zur Ermittlung der Beanspruchungs-Kenngröße mit dem jeweiligen Frequenzbereich verknüpft werden.

7. Verfahren nach Anspruch 6, dadurch gekennzeichnet, daß zur Ermittlung der schadensbestimmenden Intensitäten Größe und/oder Umfang und/oder Form der Häufigkeitsverteilung zumindest eines der Signalanteile herangezogen werden.

8. Verfahren nach Anspruch 6 oder Anspruch 7 dadurch gekennzeichnet, daß die spektralen Anteile der am Meßort erfaßten Signale einer Häufigkeitsanalyse unterzogen werden, bei der die Klassengrenzüberschreitungen ermittelt werden, daß die Häufigkeitsverteilungen typisiert werden, daß bestimmte Häufigkeitsverteilungen in Geradlinienverteilungen umgewandelt werden, und daß für jeden Frequenzbereich eine anteilstypische Beanspruchungs-Kenngröße ermittelt wird.

9. Verfahren nach Anspruch 8, dadurch gekennzeichnet, daß die anteilstypischen Beanspruchungs-Kenngrößen zu einer Gesamtbeanspruchungs-Kenngröße aufsummiert werden.

**Claims**

1. A method for early recognition of damage to machine parts, more particularly to roller bearings, in which forced vibrations are detected with the aid of a vibration detector, **characterized in that the** detected signals are broken down into periodically determined signal components, into periodically recurring components at stochastic amplitude, and into generally stochastic components, that depending on the frequency the signal components are examined to ascertain parameters for the stress of the machine part, and that the ascertained stress parameters are used to establish the type of damage and/or in order to establish a degree of damage are compared with characteristic values for the stress which the machine part can support.

**2.** A method according to claim 1, **characterized in that** signals detected by the vibration detector are digitalised and stored so as to be capable of further processing.

**3.** A method according to claim 1 or claim 2, **characterized in that** before further processing of the detected and/or stored signals, interference signal components are eliminated.

**4.** A method according to claim 3, **characterized in that** the forced vibrations arc detected in two measurement channels and, by correlating the two detected signals, interference signals are eliminated.

**5.** A method according to claim 3, **characterized in that** the forced vibrations are detected in one measurement channel in dependence on time and are compared with a calculated time function which has no interference signal components.

**6.** A method according to any one of the preceding claims, **characterized in that** frequency analyses are carried out of magnitudes, which are characteristic of the damage and are based on the signal components, for predeterminable frequency ranges, and that, with the frequency distribution, intensities which determine the damage are ascertained which are linked to the respective frequency range for ascertaining the stress parameter..

**7.** A method according to claim 6, **characterized in that** the magnitude and/or the extent and/or the shape of the frequency distribution of at least one of the signal components is used in order to ascertain the intensities which determine the damage.

**8.** A method according to claim 6 or claim 7 **characterized in that** the spectral components of the signals detected at the location of measurement are subjected to a frequency analysis, in which the crossings of the class boundaries are ascertained, that the frequency distributions are typified, that certain frequency distributions are converted into straight line distributions, and that for each frequency range a component-typical stress parameter is ascertained.

**9.** A method according to claim 8, **characterized in that** the component-typical stress parameters are added up into an overall stress parameter.

**Revendications**

**1.** Procédé de détection précoce des dommages subis par des pièces de machine en particulier par les paliers de roulement, dans lequel des oscillations forcées sont détectées à l'aide d'un capteur d'oscillations, caractérisé en ce que les signaux détectés sont décomposés en fractions de signaux de période déterminée, en fractions se reproduisant périodiquement avec amplitude aléatoire, et en fractions généralement aléatoires, en ce que les fractions de signaux sont analysées en fonction de la fréquence pour déterminer des grandeurs caractéristiques des contraintes auxquelles est soumise la pièce de machine et en ce que les grandeurs caractéristiques déterminées des contraintes sont utilisées pour définir le type de dommage et/ou sont comparées à des valeurs caractéristiques des contraintes admissibles pour la pièce de machine, en vue de définir un degré d'endommagement.

**2.** Procédé selon la revendication 1, caractérisé en ce que les signaux détectés par le capteur d'oscillations sont numérisés et mémorisés pour subir un traitement complémentaire.

**3.** Procédé selon la revendication 1 ou 2, caractérisé en ce qu'avant le traitement complémentaire des signaux détectés ou mémorisés, des fractions de signaux parasites sont éliminées.

**4.** Procédé sel on la revendication 3, caractérisé en ce que les oscillations forcées sont détectées dans deux canaux de mesure et en ce que les signaux parasites sont éliminés par corrélation des deux signaux détectés.

**5.** Procédé selon la revendication 3, caractérisé en ce que les oscillations forcées sont détectées en fonction du temps dans un canal de mesure et sont comparées à une fonction de temps calculée ne contenant pas de fractions de signaux parasites.

**6.** Procédé selon l'une des revendications précédentes caractérisé en ce qu'il est procédé à des analyses de fréquence de grandeurs caractéristiques de dommages, reposant sur les fractions de signaux pour des gammes de fréquences données et en ce qu'à partir de la distribution des fréquence, on détermine des intensités causant le dommage qui sont reliées à la gamme de fréquences respective pour déterminer la grandeur caractéristique de contrainte.

**7.** Procédé selon la revendication 6, caractérisé en ce qu'on utilise la grandeur et/ou l'étendue et/ou la forme de la distribution de fréquence, au moins de l'une des fractions de signaux, pour déterminer les intensités causant le dommage.

**8.** Procédé selon la revendication 6 ou 7, caractérisé en ce que les fractions spectrales des signaux détectés sur le lieu de mesure sont soumises à une analyse de fréquence au cours de laquelle sont déterminés les dépassements des limites des classes, en ce que les distributions de fréquences sont classés en types, en ce que des distributions de fréquence déterminées sont converties en distributions rectilignes et en ce que pour chaque gamme de fréquences on détermine une grandeur caractéristique de contrainte typique de la fraction.

**9.** Procédé selon la revendication 8, caractérisé en ce que les grandeurs caractéristiques de contraintes typiques d'une fraction sont additionnées pour donner une grandeur caractéristique de contrainte globale.

Fig. 1

Fig. 2

$$H = H_o e^{-a y^m}$$

Fig. 3

Häufigkeit H (log) / Klassengrenzenüberschreitungen

$$F_a = F_c = \frac{1}{2} F_b$$

Fig. 4

Fig. 5